# EUROPEAN PATENT APPLICATION

(11) **EP 1 669 219 A1**
(43) Date of publication of application: **14.06.2006**
(21) Application number: 04106470.0
(22) Date of filing: 10.12.2004
(51) Int. Cl.: B60C 15/06, B60C 13/00, B60C 15/00

(54) **Tire with sidewall having at least one internal rubber insert having graduated physical properties comprised of overlapping rubber segments**

(30) Priority: 18.12.2003 US 530538
(71) Applicant: THE GOODYEAR TIRE & RUBBER COMPANY, Akron, Ohio 44316-0001 (US)
(72) Inventor: Corvasce, Filomeno Gennaro, L-9170, Mertzig (LU); Dheur, Jean Luc, 6700, Arlon (BE); Koeune, Thierry, 6637, Fauvillers (BE); Depouhon, François Philippe, 6700, Arlon (BE); Nguyen, Gia Van, 6730, Rossignol (BE)
(74) Representative: Kutsch, Bernd

(57) **Abstract**

This invention relates to a pneumatic tire (1) having a sidewall (4) which contains at least one internal annular rubber insert (6, 7). In particular, this invention relates to pneumatic tires which rely upon internal pneumatic air pressure and to pneumatic tires which conventionally rely upon internal pneumatic air pressure but which have a capability of running for extended distances without any significant internal air pressure, namely ambient atmospheric air pressure, depending somewhat upon the positioning and configuration of the sidewall insert. At least one of said rubber sidewall inserts (6, 7) is composed of two segments (6A, 6B, 7A, 7B), namely a radially inner rubber segment (6A, 7A) and a radially outer rubber segment (7B, 6B). The inner rubber segment and outer rubber segment have significantly different modulus and hardness physical properties. A portion of the segments overlap each other. In one aspect, each of the segments of the dual segment sidewall insert may be comprised of various types of rubber compositions containing, for example, a dispersion of an ultra high molecular weight polyethylene and/or a dispersion of a starch/plasticizer composite and/or mixtures of carbon black and silica and/or any reinforcing and non-reinforcing materials that could be used to tune the gradient of stiffness.

## Description

### Field of the Invention

This invention relates to pneumatic tires having a sidewall which contains at least one internal annular rubber insert. In particular, this invention relates to pneumatic tires which rely upon internal pneumatic air pressure and to pneumatic tires which conventionally rely upon internal pneumatic air pressure but which have a capability of running for extended distances without any significant internal air pressure, namely ambient atmospheric air pressure, depending somewhat upon the positioning and configuration of the sidewall insert. At least one of said rubber sidewall inserts is composed of two segments, namely a radially inner rubber segment and a radially outer rubber segment. The inner rubber segment and outer rubber segment have significantly different modulus and hardness physical properties. Preferably, a portion of the segments overlap each other. In one aspect, each of the segments of the dual segment sidewall insert may be comprised of various types of rubber compositions containing, for example, a dispersion of an ultra high molecular weight polyethylene and/or a dispersion of a starch/plasticizer composite and/or mixtures of carbon black and silica and/or any reinforcing and non-reinforcing materials that could be used to tune the gradient of stiffness.

### Background of the Invention

It is sometimes desired to provide a pneumatic tire with a sidewall having a relatively high stiffness, or high modulus and hardness physical properties, to enhance a tire's handling, for example its cornering stability, when mounted on a rigid rim as a part of a wheel of a vehicle. For example, see US-A- 4,024,901 and 4,067,373.

Rubber inserts in a form of apexes in tire sidewalls are typically used to provide a graduated stiffness in the sidewall as it extends radially outward from the tire bead portion. The graduated stiffness aspect of the sidewall insert is conventionally provided by presenting the apex in a tapered configuration, namely by providing it with a relatively thick base which tapers to smaller dimensions as it extends radially outward into the sidewall and its stiffness thereby decreases proportionally.

Pneumatic tire sidewall apexes are typically used to provide a graduated stiffness in the sidewall as it extends radially outward from the tire bead portion. The graduated stiffness aspect of the sidewall insert is conventionally provided by presenting the apex in a tapered configuration, namely by providing it with a relatively thick base which tapers to smaller dimensions as it extends radially outward into the sidewall.

For this invention, it is desired to modify the graduated stiffness aspect of the tapered sidewall insert configuration by presenting the tapered insert in a form of two co-extruded, radially aligned, integral, rubber segments of rubber compositions having differing physical properties which partially overlap each other, thereby providing not only a graduated stiffness based upon a tapered configuration of the rubber insert but, also, by both the overlapping zone presented between the two segments and a differing stiffness of the rubber compositions of the individual segments themselves. For such purpose, it is desired that the respective rubber composition of the radially inner and outer segment of the tapered insert is adapted to the local type of solicitations. For example, for a rubber insert in a form of an apex, the rubber composition of the radially inner segment of the tapered insert desirably has stiffer compression properties than the radially outer segment, and the radially outer segment desirably has softer tension properties than the radially inner segment.

On the other hand, in a rubber insert in a form of a sidewall insert which is spaced apart from a sidewall apex, the rubber composition of the radially inner segment of the spaced apart, tapered, sidewall insert often desirably has softer tension properties than the radially outer segment of the spaced apart sidewall insert, and the radially outer segment of the insert often desirably has stiffer compression properties than the radially inner segment.

In practice, a conventional tire sidewall rubber insert may, for example, be in a form of a relatively stiff annular apex, of a graduated thickness configuration which might, for example, be of an entruncated substantially crescent shape, which extends from a rigid bead portion of a pneumatic tire radially outward into the tire sidewall to both provide a graduated lateral stiffness to the sidewall for tire handling purposes and to provide a transition of stiffness from the bead portion to the more flexible sidewall portion of the tire.

Alternately, a conventional sidewall rubber insert may be in a form of an annular rubber insert of a graduated thickness configuration, which is spaced apart from the rigid bead portion, as well as the sidewall apex, of a pneumatic tire and is contained within the tire sidewall to add a graduated stiffness to the sidewall for various purposes such as, for example, where it is desired to provide a tire with resistance to running flat under a reduced internal air pressure such as, for example, atmospheric pressure.

For this invention, it is desired to provide a tapered rubber sidewall insert having a graduated transition of physical properties which does not rely entirely upon a tapered shape of the insert.

US-A- 5,511,599 relates, in part, to a tire sidewall which contains a bead filler which can be contiguous with a crescent shaped reinforcing member in a manner that they may be one unitary homogeneous material or they may be separate components with the bead filler having a higher hardness and modulus of elasticity.

In the description of this invention, while the term "pneumatic tire" generally refers to a tire of a open torroid shape which is supported by an internal air pressure when mounted on a rigid rim, it is also intended herein to relate to such a tire in which the air pressure is reduced to atmospheric pressure so that the tire is not supported by air pressure which is greater than atmospheric pressure.

The term "phr" where used herein, and according to conventional practice, refers to "parts of a respective material per 100 parts by weight of rubber. In the description of this invention, the terms "rubber" and "elastomer" can be used interchangeably, unless otherwise indicated. The terms "rubber composition", "compounded rubber" and "rubber compound" can be used interchangeably to refer to "rubber which has been blended or mixed with various ingredients and materials".

The referenced 100 percent ring modulus and shore D hardness value may be determined according to ASTM D-4120 and ASTM D-2240, respectively, at 23°C.

### Disclosure and Summary of the Invention

A pneumatic tire according to claim 1 is provided. Preferably, a portion (less than 100 percent) of the first segment and a portion (less than 100 percent) of the second segment are in a overlapping configuration with each other with a diagonal interface therebetween to form an overlapping zone.

It is to be appreciated that the tire sidewall typically contains at least one cord reinforced rubber ply. In practice, at least one of said plies is positioned between said apex and said spaced apart sidewall rubber insert. Typically, the spaced apart sidewall insert is positioned adjacent to and axially inward of at least one of said plies. Typically, said apex is positioned adjacent to and axially outward of at least one of said plies. Such plies in a in a pneumatic tire, which typically extend from bead-to-bead through the crown of the tire (said crown portion of the tire being, in general, the portion of the tire radially inward of the tire tread) and which add support and stability to various components of the tire, are well known to those having skill in such art.

In practice, said overlapping zone in said sidewall rubber insert may comprise from 20 to 50 percent of the radial length of each of said segments of said sidewall rubber insert and from 10 to 30 percent of the radial length of the sidewall rubber insert.

In practice, therefore, the sidewall rubber insert may be characterized by a radially graduated stiffness (radially graduated 100 percent ring modulus and Shore D hardness physical properties of the sidewall rubber insert) formed by significant differences between the 100 percent ring modulus and Shore D hardness of the radially aligned individual segments in a cooperative combination with the said overlapping configuration (overlapping zone) of the two segments.

One envisioned aspect of such significant rubber properties of the individual segments of the sidewall rubber insert is to provide a tire with a relatively balanced handling characteristic.

Another envisioned aspect is the placement of said segmented spaced apart sidewall insert to provide a graduated stiffness in a mid to upper portion of the sidewall.

In practice, the physical properties of each of the individual segments of the apex and/or spaced apart sidewall rubber insert may be adjusted, tuned or customized by selection of appropriate combinations of elastomers and reinforcing fillers, and optionally one or more additional reinforcing and/or non-reinforcing materials (e.g. clays and short fibers), without undue experimentation by one having skill in such art in order to obtain the inserts with appropriate physical properties.

In one alternative and optional aspect of the invention, at least one of said radially inner and outer segments of the sidewall insert of this invention is comprised of a rubber composition containing a dispersion of a particulate ultra high molecular weight polyethylene and/or a dispersion of a particulate starch/plasticizer composite.

Therefore, for said alternative aspect, said inner segment and/or said outer segment may be of a rubber which contains said ultra high molecular weight polyethylene and said inner and/or said outer segment may contain said particulate starch/plasticizer composite.

Accordingly, for said alternative aspect, said radially inner segment may contain said ultra high molecular weight polyethylene and said radially outer segment may contain said starch/plasticizer or, alternately, said radially outer segment may contain said ultra high molecular weight polyethylene and said radially inner segment may contain said starch/plasticizer.

Alternately, for said alternative aspect, said radially inner rubber segment and/or said radially outer rubber segment may contain said ultra high molecular weight polyethylene to the exclusion of said starch/plasticizer composite.

Alternately, for said alternative aspect, said radially inner rubber segment and/or said radially outer rubber segment may contain said starch/plasticizer composite to the exclusion of said ultra high molecular weight polyethylene.

Alternately, both of said radially inner rubber segment and said radially outer rubber segment may contain both of said ultra high molecular weight polyethylene and said starch/plasticizer composite.

For the purposes of the alternative aspect of this invention, it is envisioned that said particulate ultra high molecular weight polyethylene has a number average molecular weight in a range of 4.5 to 8, alternatively 5 to 8, million and a melting point, according to ISO Method No. 306, in a range of 130°C to 150°C.

For the purposes of the alternative aspect of this invention, it is envisioned that said starch/plasticizer composite is a particulate composite of starch and plasticizer having a softening point in a range of from 110°C to about 170°C.

It is understood that one skilled in the pertinent art may appropriately select combinations of elastomers, reinforcing fillers, and optionally one or more additional reinforcing and/or non-reinforcing fillers (e.g. clays and short fibers), and, optionally said ultra high molecular weight polyethyethylene and/or starch/plasticizer composite to, in general, provide rubber compositions for said segments of said sidewall rubber insert with appropriate modulus and hardness values without undue experimentation.

In further accordance with this invention, such pneumatic tire is provided comprised of two spaced apart beads, circumferential tread and a rubber sidewall extending radially outward from each of said beads to a peripheral edge of said tread, wherein at least one of said rubber sidewalls contains said annular sidewall rubber insert composed of said two overlapping segments positioned internally within said sidewall.

In one aspect, said annular rubber sidewall insert is an apex typically having an entruncated substantially crescent shape with the entruncated base of the apex being juxtapositioned to said bead portion.

In another aspect, said spaced apart annular sidewall rubber insert may be of a substantially crescent shape.

In practice, the said radially inner rubber segment and/or said radially outer rubber segment of said insert composite may be comprised of, based upon parts by weight per 100 parts rubber (phr), so long as the respective segment has the said 100 ring modulus and said Shore D hardness properties;
(A) 100 phr of at least one elastomer selected from homopolymers and copolymers of isoprene and/or 1,3-butadiene and copolymers of styrene and at least one of isoprene and 1,3-butadiene;
(B) about 10 to about 50 phr of at least one reinforcing filler selected from carbon black, precipitated silica, aluminosilicate and silica-containing carbon black having silica domains on its surface within said rubber composition of said segment; and
(C) a coupling agent for said silica, aluminosilicate, silica-containing carbon black and starch composite, as the case may be, having a moiety reactive with hydroxyl groups (e.g. silanol groups) contained on the surface of said precipitated silica, aluminosilicate and said silica domains of said silica-containing carbon black and hydroxyl units contained in said starch composite, as the case may be, and another moiety interactive with said elastomer(s),
(D) from zero to 50, alternatively 5 to 40, phr of a particulate ultra high molecular weight polyethylene having a number average molecular weight average in a range of 4.5 to 8, alternatively 5 to 8, million and having a melting point according to ISO Method No. 306 in a range of 130°C to 150°C, dispersed within said rubber composition of at least one of said segments;
(E) from zero to 40, alternatively 5 to 30, phr of a particulate starch/plasticizer composite dispersed within said rubber composition of at least one of said segments; and
(F) optionally, one or more additional reinforcing and/or non-reinforcing materials (e.g. comprised of at least one particulate materials selected from, for example, clay, cured rubber (particles) and short fibers such as, for example, short fibers of glass and organic materials such as cotton, rayon, nylon and aramid fibers).

Therefore the inclusion of the ultra high molecular weight polyethylene (UHMWPE) and/or starch/plasticizer composite is an optional feature of the invention.

In practice, said starch is typically composed of amylose units and amylopectin units in a ratio of 15/85 to 35/65, alternatively 20/80 to 30/70, and has a softening point in a range of 180°C to 220°C.

In practice, said starch/plasticizer composite has a softening point in a range of 110°C to 170°C and said plasticizer is a polymeric plasticizer having a softening point of less than 160°C; wherein said softening points are determined according to ASTM No. D1228.

For the optional starch/plasticizer composite additive to at least one of the said segments of said insert composite, it is considered herein that use of a starch/plasticizer in combination with the ultra high molecular weight polyethylene (UHMWPE) dispersion in said segment of said sidewall insert, inclusions (micro dispersions) can be used to obtain a higher modulus of the rubber composition at relatively low strains (e.g.: 100 percent elongation) as a result of, at least in part, elastomer/UHMWPE/starch composite interactions.

For the purposes of this invention, it is believed that a significant contribution of optional micro inclusion, or dispersion, of the ultra high molecular weight polyethylene (UHMWPE) is to promote a significantly higher modulus of the rubber composition at relatively low strains (e.g.: 100 percent elongation).

In practice, the segmented, or graduated, sidewall insert may be prepared, for example, by co-extrusion of two individual suitable rubber compositions (to form the two overlapping segments of the sidewall rubber insert) through a suitable extruder(s) and through a suitable die to form a shaped co-extruded strip, following which the strip is built into a tire assembly and the resulting assembly cured in a suitable mold under conditions of elevated temperature and pressure.

In practice, the said reinforcing filler for the said first and second segments may be comprised of, for example, carbon black, silica or a combination of carbon black and silica, particularly precipitated silica in combination with a coupling agent, with the selection and amounts being individually tailored for each segment according to the physical properties desired without undue experimentation by one having skill in such art. For example, such reinforcing filler may be comprised of, for example,
(A) carbon black alone,
(B) 20 to 30 phr of carbon black and 10 to 60 phr of precipitated silica and/or aluminosilicate and optionally 5 to 20 phr of said starch/plasticizer composite,
(C) 30 to 50 phr of carbon black and optionally 10 to 30 phr of said starch/plasticizer composite or
(D) 15 to 30 phr of carbon black, 20 to 40 phr of silica-containing carbon black (carbon black which domains of silica on its surface) and optionally 5 to 30 phr of said starch/plasticizer composite.

It is to be appreciated that a coupling agent is to be typically used in combination with said precipitated silica, aluminosilicate, with said silica-containing carbon black and with said starch/plasticizer composite to aid in coupling such fillers to the elastomer(s) and to, thus, enhance their elastomer reinforcing effect. Such couplers are those which have a moiety reactive with hydroxyl groups (e.g. silanol groups) contained on the surface of the silica, aluminosilicate and silica-containing carbon black or the surface of the starch/plasticizer composite (e.g. hydroxyl groups) and another moiety interactive with the elastomer(s).

The philosophy of utilizing coupling agents for such purpose is well known to those having skill in such art.

For the optional starch/plasticizer composite, it is to be appreciated that starch has previously been suggested for use in rubber products, including starch/plasticizer composites. For example, see US-A- 5,762,639.

Starch is typically represented as a carbohydrate polymer having repeating units of amylose (anhydroglucopyranose units joined by glucosidic bonds) and amylopectin, a branched chain structure, as is well known to those having skill in such art. Typically, starch is composed of about 25 percent amylose and about 75 percent amylopectin (The Condensed Chemical Dictionary, Ninth Edition (1977), revised by G. G. Hawley, published by Van Nostrand Reinhold Company, Page 813). Starch can be, reportedly, a reserve polysaccharide in plants such as, for example, com, potatoes, rice and wheat as typical commercial sources.

It is considered herein that use of the optional starch/plasticizer composition, or compositions, with a softening point significantly lower than that of the starch alone, can allow the starch to be more easily mixed and processed in conventional elastomer processing equipment.

In practice, a plasticizer for said optional starch/plasticizer composite may be comprised of a poly(ethylenevinyl alcohol). A starch to plasticizer weight ratio may be, for example, in a range of about 0.5/1 to about 5/1, alternatively about 1/1 to about 5/1, so long as the starch/plasticizer composition has the required softening point range, and preferably, is capable of being a free flowing, dry powder or extruded pellets, before it is mixed with the elastomer(s).

Various blends of starch and ethylenevinyl alcohol copolymers can then be prepared according to mixing procedures well known to those having skill in such art.

It is understood that one having skill in the pertinent art can readily tune the physical properties for the appropriate rubber compositions for the inserts without undue experimentation by the inclusion of the additional reinforcing and/or non-reinforcing materials (e.g. clay and/or short fibers) as well as adjustment of any pertinent ingredient in the rubber composition(s), including curatives (e.g. sulfur and sulfur cure accelerators).

### Brief Description of the Drawings

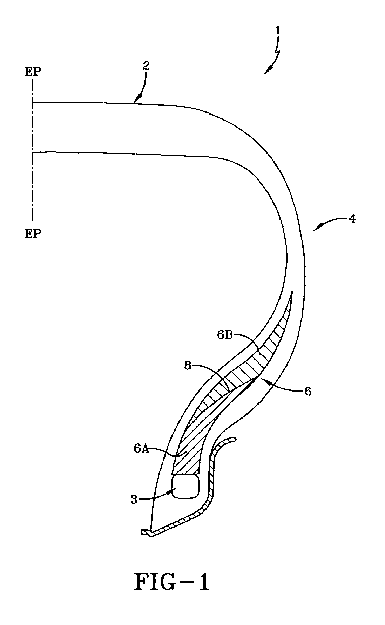

For a further understanding of the invention, reference is made to the accompanying drawings in which Figures 1 through 4 are presented which depict a partial cross-section of a tire having one or more internal sidewall rubber inserts.

### The Drawings

In the drawings, a partial cross-sectional view of pneumatic tire 1 is shown with a circumferential tread 2, bead portion 3 and sidewall portion 4 extending radially outward from said bead portion 3 to said tread 2.

In FIG 1, the sidewall portion 4 contains an internal co-extruded two-segment sidewall rubber insert in a form of an apex 6. The apex 6 is of a tapered shape extending from the bead portion 3 radially outward with its apex terminating in the sidewall 4.

The apex 6, primarily because of its positioning relatively low in the sidewall and adjacent to the bead portion 3 is normally be expected to experience mainly compressive forces as the tire is run under load. However, since the radially outer component 6B, or segment, of the apex 6 is understood to work within the sidewall 4 primarily under tension, a rubber composition for the component 6B would desirably have a lower stiffness than the radially inner component 6A and would be expected to have a higher ultimate elongation physical property.

The apex 6 is composed of, or configured as, two overlapping co-extruded rubber segments, namely:
(A) a first segment 6A as a radially inner component of the apex 6 extending radially outward from the bead portion 3, and
(B) a second segment 6B as a radially outer component of the apex 6 extending radially outward from said inner segment 6A further into said sidewall portion 4;
wherein said inner segment 6A and said outer segment 6B are in an overlapping configuration with a diagonal interface 8 therebetween forming an overlapping zone,
wherein said outer segment 6B is of an overall thinner cross-section than said inner segment 6A.

For the purposes of this drawing presentation, the rubber composition of said inner segment 6A is a significantly tougher (greater 100 percent ring modulus) and harder (greater Shore D hardness) rubber composition than the rubber composition of said outer segment 6B of the apex 6.

In particular, for the purposes of this drawing, the rubber composition of the outer rubber segment 6B has a 100 percent ring modulus (at 23°C) of about 6 MPa and a Shore D hardness of about 30 and the rubber composition of the overlapping, inner rubber segment 6A has a 100 percent ring modulus (at 23°C) of about 15 MPa and a Shore D hardness of about 43.

Therefore, the apex 6 may be characterized by having a graduated stiffness provided by both the individual segments of differing modulus and hardness properties and, also, by the overlapping configuration of the segments.

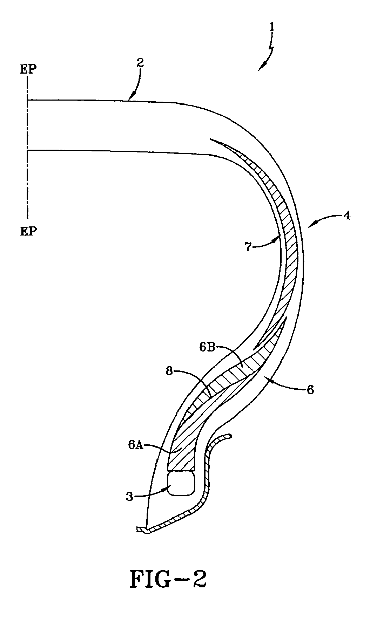

In FIG 2, the sidewall portion 4 contains the two-segment apex 6 of FIG 1 together with an additional, spaced apart, sidewall insert 7 spaced apart from and extending radially outward from the apex 6 in an overlapping relationship with the apex 6 in which the spaced apart overlapping portion of the spaced apart sidewall insert 7 is axially inward of the apex 6.

The spaced apart sidewall insert 7, because of its positioning radially further outward into the tire sidewall, would normally be expected to experience a combination of compression and extension forces.

For the purposes of this drawing, the spaced apart sidewall insert 7 is of a unitary rubber composition having modulus and hardness values similar to those of the rubber composition of said inner apex segment 6A, namely a 100 percent ring modulus (at 23°C) of about 15 MPa and a Shore D hardness of about 43.

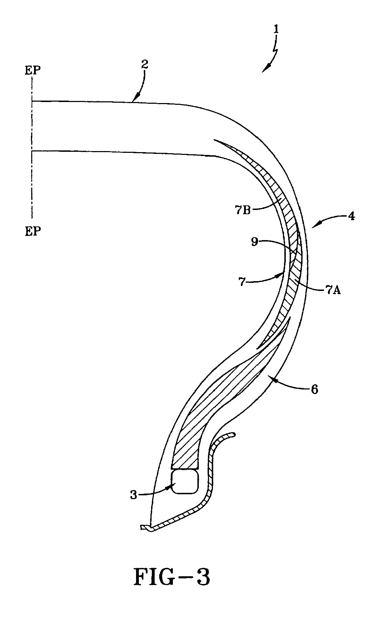

In FIG 3, the sidewall portion 4 contains a sidewall apex 6 similar in shape to the two-segment apex 6 of FIG 1 except that the apex is of a unitary rubber composition, together with a an additional spaced-apart sidewall insert 7 of the shape and positioning as the additional spaced-apart sidewall insert 7 of FIG 2 except that the spaced-apart sidewall insert for FIG 3 is composed of a co-extruded two-segment insert, namely a radially inner segment 7A and a radially outer segment 7B.

In particular, the spaced apart sidewall insert 7 is composed of, or configured as, two overlapping co-extruded rubber segments, namely:
(A) a first segment 7A as a radially inner component of the insert, and
(B) a second segment 7B as a radially outer component of the sidewall insert 7 extending radially outward from said inner segment 7A further into said sidewall portion 4 and approaching a tread portion 2 of the tire 1;
wherein said radially inner segment 7A and said radially outer segment 7B are in an overlapping configuration with a diagonal interface 9 therebetween forming an overlapping zone.

For the purposes of this drawing presentation, namely FIG 3, the rubber composition of said radially outer segment 7B is of a significantly tougher and harder rubber composition than the rubber composition of said radially inner segment 7A.

In particular, for the purposes of this drawing, the rubber composition of the radially outer rubber segment 7B has a 100 percent ring modulus (at 23°C) of about 15 MPa and a Shore D hardness of about 43 and the rubber composition of the overlapping radially inner rubber segment 7A has a 100 percent ring modulus (at 23°C) of about 6 MPa and a Shore D hardness of about 30.

Therefore, the spaced apart sidewall rubber insert 7 may be characterized by having a graduated stiffness provided by both the individual segments of differing modulus and hardness properties and, also, by the overlapping configuration of the segments.

For the purposes of this drawing, the rubber composition of the apex 6 of unitary rubber composition has the modulus and hardness properties of segment 6A of the apex 6 presented in FIG 1.

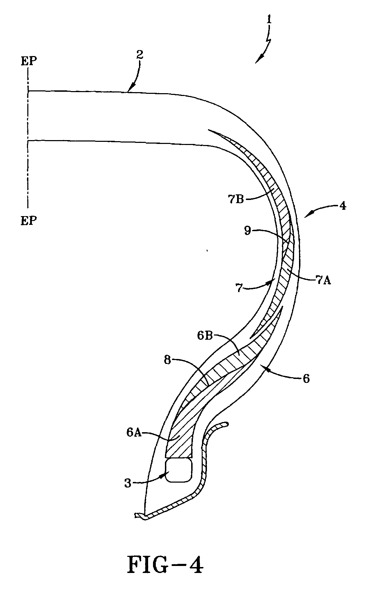

In FIG 4, the sidewall portion 4 contains the co-extruded two-segment sidewall apex 6 of the shape, positioning and composition of the apex 6 of FIG 2 and the spaced apart two segmented sidewall rubber insert 7 of the shape, positioning and composition of the spaced apart sidewall rubber insert 7 of FIG 3.

For consideration of this drawing, a cord reinforced rubber ply (not shown) is envisioned for the Figures which is contained in the sidewall 4 and extends from the bead portion 3 through the crown portion of the tire (not identified in the drawing) radially inward of the tire tread portion 2 to the opposite bead portion (not shown) of the tire. For Figures 2, 3, and 4, it is envisioned that the ply is positioned between said apex 6 and said spaced apart sidewall rubber insert 7 in which the spaced apart sidewall rubber insert is thereby positioned adjacent to and axially inward from the ply. For all of the Figures, the apex 6 is envisioned as being positioned adjacent to and axially outward from the ply. The ply is envisioned as extending to the axially inward side of the bead 3 and apex 6, then around the radially inward part of the bead portion 3 to thereafter, in what is typically referred to as a ply turn-up portion, extending to the axially outward side of the bead portion 3 and apex 6 for a relatively short distance radially outward into the tire sidewall 4. Such ply with its ply tum-up portion is well known to those having skill in such art in which the apex 6 is therefore adjacent to and axially outward of the ply and adjacent to and axially inward of the ply turn-up.

It is readily understood by those having skill in the art that the rubber compositions used for the insert for this invention, particularly the segments of the insert, may be prepared, or compounded, by methods generally known in the rubber compounding art without undue experimentation to achieve the aforesaid 100 percent modulus and Shore D hardness physical properties, such as mixing the various sulfur-vulcanizable constituent rubbers with various commonly used additive materials, as may be appropriate, such as, for example, curing aids, such as sulfur, activators, retarders and accelerators, processing additives, such as oils, resins including tackifying resins, particulate reinforcement as hereinbefore discussed, and plasticizers, fillers, pigments, fatty acid, zinc oxide, waxes, antioxidants and antiozonants and peptizing agents. As known to those skilled in the art, depending on the intended use of the sulfur-vulcanizable and sulfur-vulcanized material (rubbers), the additives mentioned above are selected and commonly used in conventional amounts as appropriate.

The tire can be built, shaped, molded and cured by various methods which will be readily apparent to those having skill in such art.

## Claims

1. A pneumatic tire (1) comprised of a circumferential tread (2), two spaced apart beads (3), and sidewalls (4) connecting said beads (3) and tread (2), wherein said tire sidewall (4) is **characterized by** containing at least one internal annular sidewall rubber insert (6, 7) composed of co-extruded first rubber segment (6A) and second rubber segment (6B),
(A) wherein for first and second rubber segments (6A, 6B) of said sidewall rubber insert (6, 7);
(1) the rubber composition of said first rubber segment (6, 7) has a 100 percent ring modulus at 23°C within a range of 10 to 20 MPa and a Shore D hardness value at 23°C within a range of 30 to 55, alternately 35 to 55;
(2) the rubber composition of said second rubber segment (6B) has a 100 percent ring modulus at 23°C within a range of 3 to 12 MPa and Shore D hardness value at 23°C within a range of 25 to 35;
(3) said 100 percent ring modulus of said rubber composition of said first rubber segment (6A) is at least five MPa greater than said 100 percent ring modulus of the rubber composition of said second rubber segment (6B); and
(4) said Shore D hardness of said rubber composition of said first rubber segment (6A) is at least five units greater than the Shore D hardness of the rubber composition of said second rubber segment (6B);
(B) wherein said tire sidewall (4) contains:
(1) an apex (6) composed of said sidewall rubber insert extending from a tire bead (3) radially outward into said tire sidewall (4), wherein said first rubber segment (6A) of said apex (6) is a radially inner component thereof and said second rubber segment (6B) of said apex (6) is a radially outer component thereof, or
(2) an apex (6) and an additional said sidewall rubber insert (7) wherein said additional sidewall insert (7) is spaced apart from said apex (6), extends radially outward and axially inward from said apex (6) in an overlapping relationship therewith, wherein
(a) said apex (6) is composed of said tire sidewall rubber insert extending from a tire bead (3) radially outward into said tire sidewall (4), wherein said first rubber segment (6A) of said apex (6) is a radially inner component thereof and said second rubber segment (6B) of said apex (6) is a radially outer component thereof, and;
(b) for said spaced apart sidewall insert (7), said first rubber segment (7B) of said spaced apart sidewall rubber insert (7) is a radially outer component thereof and said second rubber segment (7A) of said spaced apart sidewall rubber insert (7) is a radially inner component thereof, or
(3) an apex (6) and an additional said sidewall rubber insert (7) wherein said additional sidewall rubber insert (7) is spaced apart from said apex (6), extends radially outward and axially inward from said apex in an overlapping relationship therewith, wherein
(a) said apex (6) extends radially outward from a tire bead (3) into a tire sidewall (4), wherein said apex (6) is of a unitary rubber composition, and;
(b) for said spaced apart sidewall rubber insert (7), said first rubber segment (7B) of said spaced apart sidewall rubber insert (7) is a radially outer component thereof and said second rubber segment (7A) of said spaced apart sidewall rubber insert (7) is a radially inner component thereof, or
(4) an apex (6) and an additional said sidewall rubber insert (7) wherein said additional sidewall rubber insert (7) is spaced apart from said apex (6), extends radially outward and axially inward from said apex (6) in an overlapping relationship therewith, wherein
(a) said apex (6) is composed of said tire sidewall rubber insert extending from a tire bead radially outward into said tire sidewall, wherein said first rubber segment (6B) of said apex (6) is a radially inner component thereof and said second rubber segment (6B) of said apex (6) is a radially outer component thereof, and;
(b) said spaced apart sidewall insert (7) is comprised of a unitary rubber composition, or
(5) an apex (6) and an additional said sidewall rubber insert (7) wherein said additional sidewall rubber insert (7) is spaced apart from said apex (6), extends radially outward and axially inward from said apex (6) in an overlapping relationship therewith, wherein
(a) said apex (6) is composed of said tire sidewall rubber insert extending from a tire bead (3) radially outward into said tire sidewall (4), wherein said first rubber segment (6B) of said apex (6) is a radially inner component thereof and said second rubber segment (6A) of said apex (6) is a radially outer component thereof, and;
(b) for said spaced apart sidewall insert (7), said second rubber segment (7A) of said spaced apart sidewall rubber insert (7) is a radially outer component thereof and said first rubber segment (78) of said spaced apart sidewall rubber insert (7) is a radially inner component thereof, or
(6) an apex (6) and an additional said sidewall rubber insert (7) wherein said additional sidewall rubber insert (7) is spaced apart from said apex (6), extends radially outward and axially inward from said apex (6) in an overlapping relationship therewith, wherein
(a) said apex (6) extends radially outward from a tire bead (3) into a tire sidewall (4), wherein said apex (6) is of a unitary rubber composition, and;
(b) for said spaced apart sidewall insert (7), said first rubber segment (7B) of said spaced apart sidewall rubber insert (7) is a radially inner component thereof and said second rubber segment (7A) of said spaced apart sidewall rubber insert (7) is a radially outer component thereof.

2. The tire of claim 1, wherein a portion of said first segment (6A) and a portion of said second segment (6B) of the annular sidewall rubber insert are in a overlapping configuration with each other with a diagonal interface (8, 9) therebetween to form an overlapping zone.

3. The tire of claim 2, wherein said overlapping zone of the radially inner segment (6A, 7A) and radially outer segment (6B, 7B) of said sidewall rubber insert (6, 7) comprises from 20 to 50 percent of the radial length of each of said segments of said sidewall segments and from 10 to 30 percent of the radial length of the sidewall rubber insert.

4. The tire of at least one of the preceding claims, wherein said tire sidewall rubber insert is an apex (6) extending from a tire bead radially outward into said tire sidewall, wherein said first rubber segment (6A) of said apex is a radially inner component thereof and said second rubber segment (6B) of said apex is a radially outer component thereof.

5. The tire of at least one of the preceding claims, wherein said tire sidewall inserts are an apex (6) and an additional said sidewall rubber insert (7), wherein said additional sidewall insert (7) is spaced apart from said apex (6), extends radially outward and axially inward from said apex in an overlapping relationship therewith, wherein
(A) said apex is composed of said tire sidewall rubber insert extending from a tire bead radially outward into said tire sidewall, wherein said first rubber segment of said apex is a radially inner component thereof and said second rubber segment of said apex is a radially outer component thereof, and;
(B) for said spaced apart sidewall insert, said first rubber segment of said spaced apart sidewall rubber insert is a radially outer component thereof and said second rubber segment of said spaced apart sidewall rubber insert is a radially inner component thereof.

6. The tire of at least one of the preceding claims, wherein said tire sidewall inserts are an apex and an additional said sidewall rubber insert, wherein said additional sidewall insert is spaced apart from said apex, extends radially outward and axially inward from said apex in an overlapping relationship therewith, wherein
(A) said apex extends radially outward from a tire bead into a tire sidewall, wherein said apex is of a unitary rubber composition, and;
(B) for said spaced apart sidewall insert, said first rubber segment of said spaced apart sidewall rubber insert is a radially outer component thereof and said second rubber segment of said spaced apart sidewall rubber insert is a radially inner component thereof.

7. The tire of at least one of the preceding claims, wherein said sidewall inserts are an apex and an additional said sidewall rubber insert, wherein said additional sidewall insert is spaced apart from said apex, extends radially outward and axially inward from said apex in an overlapping relationship therewith, wherein
(A) said apex is composed of said tire sidewall rubber insert extending from a tire bead radially outward into said tire sidewall, wherein said first rubber segment of said apex is a radially inner component thereof and said second rubber segment of said apex is a radially outer component thereof, and;
(B) said spaced apart sidewall insert is comprised of a unitary rubber composition.

8. The tire of at least one of the preceding claims, wherein said sidewall inserts are an apex and an additional said sidewall rubber insert, wherein said additional sidewall rubber insert is spaced apart from said apex, extends radially outward and axially inward from said apex in an overlapping relationship therewith, wherein
(A) said apex is composed of said tire sidewall rubber insert extending from a tire bead radially outward into said tire sidewall, wherein said first rubber segment of said apex is a radially inner component thereof and said second rubber segment of said apex is a radially outer component thereof, and;
(B) for said spaced apart sidewall insert, said second rubber segment of said spaced apart sidewall rubber insert is a radially outer component thereof and said first rubber segment of said spaced apart sidewall rubber insert is a radially inner component thereof.

9. The tire of at least one of the preceding claims, wherein said sidewall inserts are an apex and an additional said sidewall rubber insert, wherein said additional sidewall rubber insert is spaced apart from said apex, extends radially outward and axially inward from said apex in an overlapping relationship therewith, wherein
(A) said apex extends radially outward from a tire bead into a tire sidewall, wherein said apex is of a unitary rubber composition, and;
(B) for said spaced apart sidewall rubber insert, said first rubber segment of said spaced apart sidewall rubber insert is a radially inner component thereof and said second rubber segment of said spaced apart sidewall rubber insert is a radially outer component thereof.

10. The tire of at least one of the preceding claims, wherein at least one of said radially inner rubber segment and/or said radially outer rubber segment of said two-segment sidewall rubber insert is comprised of a rubber composition which contains from 5 to 40 phr of a dispersion of an particulate ultra high molecular weight polyethylene, and/or wherein at least one of said radially inner rubber segment and/or said radially outer rubber segment of said two-segment sidewall rubber insert is comprised of a rubber composition which contains from 5 to 30 phr of a dispersion of a starch/plasticizer composite having a starch to plasticizer weight ratio in a range of from 0.5/1 to 5/1 and said rubber segments are exclusive of said ultra high molecular weight polyethylene.
